# EUROPEAN PATENT APPLICATION

(11) **EP 4 117 087 A1**
(43) Date of publication of application: **11.01.2023**
(21) Application number: 21191203.5
(22) Date of filing: 13.08.2021
(51) Int. Cl.: H01M 10/613, H01M 10/625, H01M 10/6567, H01M 10/6568, C09K 5/00, C09K 21/06

(54) **PHOSPHATE ESTER HEAT TRANSFER FLUIDS FOR IMMERSION COOLING SYSTEM**

(30) Priority: 07.07.2021 US 202163219204 P
(71) Applicant: Lanxess Corporation, Pittsburgh, PA 15275-1112 (US)
(72) Inventor: Fletschinger, Dr. Michael, 8303 Illnau (CH); Milne, Neal, Cheshire, CH4 7LS (GB); Benanti, Travis, Connecticut, 06032 (US)
(74) Representative: Wichmann, Birgid

(57) **Abstract**

An immersion cooling system includes electrical componentry, a heat transfer fluid, and a reservoir. The electrical componentry is at least partially immersed in the heat transfer fluid within the reservoir, and a circulating system circulates the heat transfer fluid out of the reservoir, through a circulating pipeline, and back into the reservoir. The heat transfer fluid contains one or more phosphate ester compounds and exhibits favorable properties in a circulating immersion cooling system, such as low flammability, low pour point, high electrical resistivity and low viscosity for pumpability.

## Description

The present disclosure relates to an immersion cooling system for electrical componentry, such as for cooling a power system (e.g., battery module) of an electric vehicle. The immersion cooling system employs a heat transfer fluid comprising at least one phosphate ester, as described herein. In particular, the phosphate ester materials of the present disclosure exhibit favorable properties in a circulating immersion cooling system, such as low flammability, low pour point, high electrical resistivity and low viscosity for pumpability.

Electrical componentry that use, store and/or generate energy or power can generate heat. For example, battery cells, such as lithium-ion batteries, generate large amounts of heat during charging and discharging operations. Traditional cooling systems employ air cooling or indirect liquid cooling. Commonly, water/glycol solutions are used as heat transfer fluids to dissipate heat via indirect cooling. In this cooling technique, the water/glycol coolant flows through channels, such as pipes or jackets, around the battery or through plates within the battery framework. The water/glycol solutions, however, are highly conductive and must not contact the electrical componentry, such as through leakage, for risk of causing short circuits, which can lead to heat propagation and thermal runaway. In addition, questions remain whether indirect cooling systems can adequately and efficiently remove heat under the increasing demands for high loading (fast charging), high capacity batteries.

Cooling by immersing electrical componentry into a coolant is a promising alternative to traditional cooling systems. For example, US 2018/0233791 A1 discloses a battery pack system to inhibit thermal runaway wherein a battery module is at least partially immersed in a coolant in a battery box. The coolant may be pumped out of the battery box, through a heat exchanger, and back into the battery box. As the coolant, trimethyl phosphate and tripropyl phosphate are mentioned, among other chemistries. However, as shown in the present application, a trimethyl phosphate fluid or tripropyl phosphate fluid exhibits a low direct-current (DC) resistivity, and each exhibits a low flash point such that the flammability of each fluid renders it unsuitable.

A need exists for the development of circulating immersion cooling systems employing flowable heat transfer fluids having low flammability, low pour point, high electrical resistivity and low viscosity.

To fulfill this need, phosphate esters of formula (I) are disclosed herein containing longer chain alkylation (at least 6 carbon atoms) and/or alkyl-substituted phenyl.

The immersion cooling system of the present disclosure comprises electrical componentry, a heat transfer fluid, and a reservoir, wherein the electrical componentry is at least partially immersed in the heat transfer fluid within the reservoir, and a circulating system capable of circulating the heat transfer fluid out of the reservoir, through a circulating pipeline of the circulating system, and back into the reservoir, wherein the heat transfer fluid comprises one or more than one phosphate ester of formula (I) 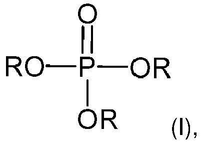 where each R in formula I is independently chosen from C₆₋₁₈ alkyl or each R is independently chosen from unsubstituted phenyl and C₁₋₁₂ alkyl-substituted phenyl, provided that the R groups are not all unsubstituted phenyl, and the one or more than one phosphate ester of formula (I) constitutes more than 50% by weight based on the total weight of all phosphate esters in the heat transfer fluid.

Also disclosed is a method of cooling electrical componentry comprising at least partially immersing electrical componentry in a heat transfer fluid within a reservoir, and circulating the heat transfer fluid out of the reservoir, through a circulating pipeline of a circulation system, and back into the reservoir, wherein the heat transfer fluid comprises at least one phosphate ester of formula (I) above.

The system and method of the present disclosure are suitable for a wide variety of electrical componentry, and particularly in the cooling of battery systems.

The preceding summary is not intended to restrict in any way the scope of the claimed invention. In addition, it is to be understood that both the foregoing general description and the following detailed description are exemplary and explanatory only and are not restrictive of the invention, as claimed.

### BRIEF DESCRIPTION OF THE FIGURES

FIG. 1 and FIG. 2 each shows a block flow diagram of an exemplary immersion cooling system according to the present disclosure.
FIG. 3 and FIG. 4 are schematic diagrams of exemplary immersion cooling systems according to the present disclosure.

Unless otherwise specified, the word "a" or "an" in this application means "one or more than one".

In accordance with the present disclosure, an immersion cooling system comprises electrical componentry, a heat transfer fluid, and a reservoir, wherein the electrical componentry is at least partially immersed in the heat transfer fluid within the reservoir, and a circulating system capable of circulating the heat transfer fluid out of the reservoir, through a circulating pipeline of the circulating system, and back into the reservoir.

Electrical componentry includes any electronics that generate thermal energy in need of dissipation for safe usage. Examples include batteries, fuel cells, aircraft electronics, computer electronics such as microprocessors, un-interruptable power supplies (UPSs), power electronics (such as IGBTs, SCRs, thyristors, capacitors, diodes, transistors, rectifiers and the like), invertors, DC to DC convertors, chargers (e.g., within loading stations or charging points), phase change invertors, electric motors, electric motor controllers, DC to AC invertors, and photovoltaic cells.

The system and method of the present disclosure is particularly useful for cooling battery systems, such as those in electric vehicles (including passenger and commercial vehicles), e.g., in electric cars, trucks, buses, industrial trucks (e.g., forklifts and the like), mass transit vehicles (e.g., trains or trams) and other forms of electric powered transportation.

Typically, electrified transportation is powered by battery modules. A battery module may encompass one or more battery cells arranged or stacked relative to one another. For example, the module can include prismatic, pouch or cylindrical cells. During charging and discharging (use) operations of the battery, heat is typically generated by the battery cells, which can be dissipated by the immersion cooling system. Efficient cooling of the battery via the immersion cooling system allows for fast charge times at high loadings, while maintaining safe conditions and avoiding heat propagation and thermal runaway. Electrical componentry in electric powered transportation also include electric motors, which can be cooled by the immersion cooling system.

In accordance with the present disclosure, the electrical componentry is at least partially immersed in the heat transfer fluid within a reservoir. Often, the electrical componentry is substantially immersed or fully immersed in the heat transfer fluid, such as immersing (in the case of a battery module) the battery cell walls, tabs and wiring. The reservoir may be any container suitable for holding the heat transfer fluid in which the electrical componentry is immersed. For example, the reservoir may be a container or housing for the electrical componentry, such as a battery module container or housing.

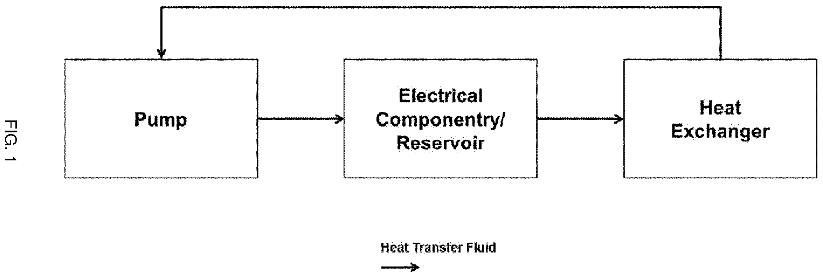

The immersion cooling system further comprises a circulating system capable of circulating the heat transfer fluid out of the reservoir, through a circulating pipeline of the circulating system, and back into the reservoir. Often, the circulating system includes a pump and a heat exchanger. In operation, for example as shown in FIG. 1, the circulating system may pump heated heat transfer fluid out of the reservoir through a circulating pipeline and through a heat exchanger to cool the heat transfer fluid and pump the cooled heat transfer fluid through a circulating pipeline back into the reservoir. In this manner, during operation of the electrical componentry (which is at least partially immersed in the heat transfer fluid within the reservoir), such as during charging or discharging operations of a battery, the immersion cooling system is operated to absorb heat generated by the electrical componentry, to remove heat transfer fluid that has been heated by the electrical componentry for cooling in the heat exchanger, and to circulate the cooled heat transfer fluid back into the reservoir.

The heat exchanger may be any heat transfer unit capable of cooling the heated heat transfer fluid to a temperature suitable for the particular application. For example, the heat exchanger may use air cooling (liquid to air) or liquid cooling (liquid to liquid). The heat exchanger, for example, may be a shared heat transfer unit with another fluid circuit within the electrical equipment or device, such as a refrigeration/air conditioning circuit in an electric vehicle. The circulation system may flow the heat transfer fluid through multiple heat exchangers, such as air cooling and liquid cooling heat exchangers.

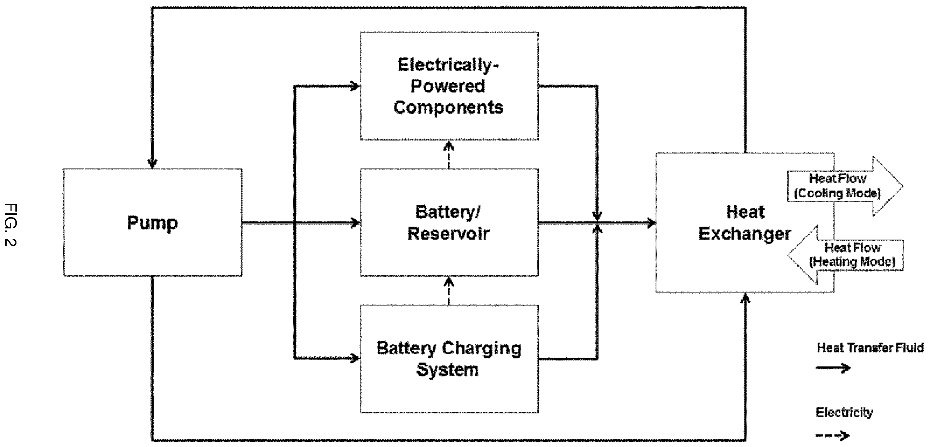

The circulation pipeline of the circulating system may flow the heat transfer fluid to other electrical componentry that generate thermal energy in need of dissipation within the electrical equipment or device. For example, as shown in FIG. 2 for immersion cooling of a battery, the heat transfer fluid may also be used for immersion cooling of electrical componentry being powered by the battery (e.g., an electric motor) and/or immersion cooling of electrical componentry employed in charging the battery. The heated heat transfer fluid flowing out of the container(s) or housing(s) of the various electrical componentry may be cooled in one or more heat exchangers and the cooled heat transfer fluid may be circulated back to the container(s) or housing(s).

The circulating system may also include a heat transfer fluid tank to store and/or maintain a volume of heat transfer fluid. For example, cooled heat transfer fluid from a heat exchanger may be pumped into the heat transfer fluid tank and from the heat transfer fluid tank back into the reservoir.

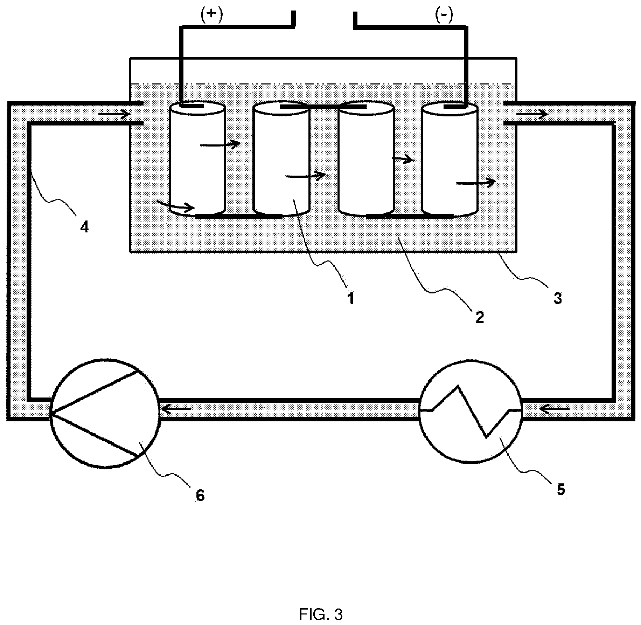

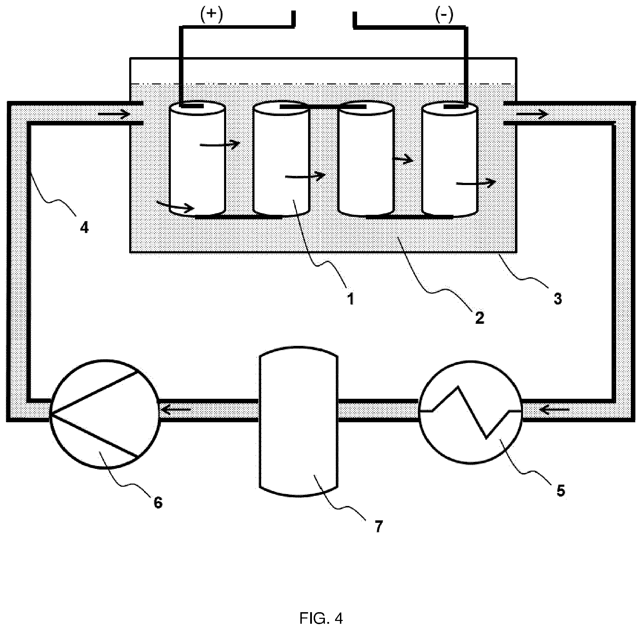

An example of an immersion cooling system in accordance with the present disclosure is shown in FIG. 3. The electrical componentry and reservoir are enlarged for purposes of illustration. The system comprises electrical componentry **1** (which, in this example, are battery cells of a battery module), a heat transfer fluid **2,** and a reservoir **3.** The electrical componentry **1** is at least partially immersed (in FIG. 3, fully immersed) in the heat transfer fluid **2** within the reservoir **3.** A circulating system comprising circulating pipeline **4,** a heat exchanger **5** and a pump **6** moves heated heat transfer fluid **2** out of the reservoir for cooling in heat exchanger **5** and the cooled heat transfer fluid is circulated back into the reservoir **3.** The circulating system may also include a heat transfer fluid tank **7,** as shown in FIG. 4.

The depicted flow of the heat transfer fluid **2** over and around the electrical componentry **1** as shown in FIG. 3 and FIG. 4 is exemplary only. The electrical componentry may be arranged within the reservoir in any way suitable for the type of electrical componentry and the intended application. Similarly, the flow of heat transfer fluid in and out of the reservoir and the flow through the reservoir may be accomplished in any manner suitable to ensure that the electrical componentry remains at least partially immersed in the heat transfer fluid. For example, the reservoir may include multiple inlets and outlets. The heat transfer fluid may flow from side to side, top to bottom or from bottom to top of the reservoir or a combination thereof, depending upon the desired orientation of the electrical componentry and the desired fluid flow of the system. The reservoir may include baffles for guiding the flow of heat transfer fluid over and/or around the electrical componentry. As a further example, the heat transfer fluid may enter the reservoir via a spray system, such as being sprayed on the electrical componentry from one or more top inlets of the reservoir.

While the system and method of the present disclosure is particularly useful for cooling of electrical componentry, such as battery modules, the presently disclosed immersion arrangement of the electrical componentry in the heat transfer fluid also allows the fluid to transfer heat to the electrical componentry to provide temperature control in cold environments. For example, the immersion cooling system may be equipped with a heater to heat the heat transfer fluid, such as shown in FIG. 2 where the heat exchanger may operate in a "heating mode." The heated fluid may transfer heat to the immersed electrical componentry to achieve and/or maintain a desired or optimal temperature for the electrical componentry, such as a desired or optimal temperature for battery charging.

The heat transfer fluid of the immersion cooling system comprises one or more than one phosphate ester of formula (I) 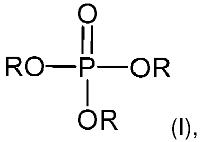 where each R in formula I is independently chosen from C₆₋₁₈ alkyl or each R is independently chosen from unsubstituted phenyl, and C₁₋₁₂ alkyl-substituted phenyl, provided that the R groups are not all unsubstituted phenyl, and the one or more than one phosphate ester of formula (I) constitutes more than 50% by weight based on the total weight of all phosphate esters in the heat transfer fluid.

In some embodiments, each R in formula (I) is independently chosen from C₆₋₁₈ alkyl. In other embodiments, each R in formula (I) is independently chosen from C₁₋₁₂ alkyl-substituted phenyl. Each such R in formula (I) may, but need not, be the same.

In further embodiments, each R in formula (I) is independently chosen from unsubstituted phenyl and C₁₋₁₂ alkyl-substituted phenyl, provided that the R groups are not all unsubstituted phenyl. For example, in some embodiments, one R group is C₁₋₁₂ alkyl-substituted phenyl, and the remaining two R groups are unsubstituted phenyl, or two R groups are independently chosen from C₁₋₁₂ alkyl-substituted phenyl and the remaining R group is unsubstituted phenyl. In some embodiments, the two R groups chosen from C₁₋₁₂ alkyl-substituted phenyl are the same.

R as "C₆₋₁₈ alkyl" in formula (I) may be a straight or branched chain alkyl group having the specified number of carbon atoms. Often, R as "C₆₋₁₈ alkyl" has at least 8 carbon atoms. Preferably, R as C₆₋₁₈ alkyl is C₆₋₁₂ or C₈₋₁₂ alkyl or C₆₋₁₀ or C₈₋₁₀ alkyl. Examples of unbranched alkyl groups include n-hexyl, n-heptyl, n-octyl, n-nonyl, n-decyl, n-undecyl, and n-dodecyl. Examples of branched alkyl groups include 2-methylpentyl, 2-ethylbutyl, 2,2-dimethylbutyl, 6-methylheptyl, 2-ethylhexyl, t-octyl, 3,5,5-trimethylhexyl, 7-methyloctyl, 2-butylhexyl, 8-methylnonyl, 2-butyloctyl, 11-methyldodecyl and the like. Examples of linear alkyl and branched alkyl groups also include moieties commonly called isononyl, isodecyl, isotridecyl and the like, where the prefix "iso" is understood to refer to mixtures of alkyls such as those derived from an oxo process.

R as "C₁₋₁₂ alkyl-substituted phenyl" in formula (I) refers to a phenyl group substituted by a C₁₋₁₂ alkyl group. The alkyl group may be a straight or branched chain alkyl group having the specified number of carbon atoms. More than one alkyl group may be present on the phenyl ring (e.g., phenyl substituted by two alkyl groups or three alkyl groups). Often, however, the phenyl is substituted by one alkyl group (i.e., mono-alkylated). Preferably, the C₁₋₁₂ alkyl is chosen from C₁₋₁₀ or C₃₋₁₀ alkyl, more preferably C₁₋₈ or C₃₋₈ alkyl, or C₁₋₆ or C₃₋₆ alkyl. Examples of such alkyl groups include methyl, ethyl, n-propyl, isopropyl, n-butyl, isobutyl, sec-butyl, t-butyl, pentyl, isopentyl, t-pentyl, 2-methylbutyl, n-hexyl, 2-methylpentyl, 2-ethylbutyl, 2,2-dimethylbutyl, 6-methylheptyl, 2-ethylhexyl, isooctyl, t-octyl, isononyl, 3,5,5-trimethylhexyl, 2-butylhexyl, isodecyl, and 2-butyloctyl and the like. The alkylating agents may include olefins derived from cracking of naphtha, such as propylene, butylene, diisobutylene, and propylene tetramer. Said alkyl substitution on the phenyl ring may be at the ortho-, meta-, or para-position, or a combination thereof. Often, the alkyl substitution is at the para-position or predominantly at the para-position.

In many embodiments, the heat transfer fluid of the present disclosure comprises more than one phosphate ester of formula (I), that is, a mixture of phosphate esters of formula (I). For example, the heat transfer fluid may include a mixture of compounds of formula (I) wherein each R is independently chosen from C₆₋₁₈ alkyl.

In additional embodiments, the heat transfer fluid includes an isomeric mixture of phosphate esters of formula (I), for example, such phosphate esters containing branched alkyl isomers, such as derived from a mixture of isomers of branched aliphatic alcohols or branched alkylated phenols.

In additional embodiments, the heat transfer fluid includes an isomeric mixture of phosphate esters of formula (I) containing ortho-, meta-, and/or para isomers of C₁₋₁₂ alkyl-substituted phenyl, such as trixylenyl phosphate, tricresyl phosphate and the like.

Further, the heat transfer fluid may include two or more phosphate esters of formula (I) wherein each R in each such compound is chosen from unsubstituted phenyl and C₁₋₁₂ alkyl-substituted phenyl, provided that the R groups are not all unsubstituted phenyl, and the compounds differ in the number of R groups that are C₁₋₁₂ alkyl-substituted phenyl. For example, the mixture of compounds of formula (I) may comprise at least two, often all three, from the group chosen from mono(alkylphenyl) diphenyl phosphate, di(alkylphenyl) monophenyl phosphate and tri(alkylphenyl) phosphate, where "alkylphenyl" is C₁₋₁₂ alkyl-substituted phenyl as described herein.

Such mixture of compounds of formula (I) may comprise, for example,
(a) from about 35 wt% to about 95 wt% mono(alkylphenyl) diphenyl phosphate,
(b) from about 5 wt% to about 55 wt% di(alkylphenyl) monophenyl phosphate, and
(c) from about 0, from about 2 or from about 5 wt% to about 20 wt% of tri(alkylphenyl) phosphate, where components (a), (b) and (c) total 100 wt% and all of the weight percentages are based on the total weight of all phosphate esters of formula (I).

In many embodiments, such mixture of compounds of formula (I) comprises
(a) from about 65 wt% to about 95 wt%, such as from about 70 or from about 75 wt% to about 90 or to about 85 wt%, mono(alkylphenyl) diphenyl phosphate,
(b) from about 5 wt% to about 35 wt%, such as from about 10 or from about 15 wt% to about 30 or to about 25 wt%, di(alkylphenyl) monophenyl phosphate, and
(c) from about 0 or from about 1 wt% to about 5 or to about 4 wt%, tri(alkylphenyl) phosphate,
where components (a), (b) and (c) total 100 wt% and all of the weight percentages are based on the total weight of all phosphate esters of formula (I).

In many embodiments, such mixture of compounds of formula (I) comprises
(a) from about 35 wt% to about 65 wt%, such as from about 40 or from about 45 wt% to about 60 or to about 55 wt%, mono(alkylphenyl) diphenyl phosphate,
(b) from about 25 wt% to about 55 wt%, such as from about 30 or from about 35 wt% to about 50 or to about 45 wt%, di(alkylphenyl) monophenyl phosphate, and
(c) from about 5 wt% to about 20 wt%, such as from about 5 wt% to about 15 wt%, tri(alkylphenyl) phosphate, where components (a), (b) and (c) total 100 wt% and all of the weight percentages are based on the total weight of all phosphate esters of formula (I).

The heat transfer fluid of the present disclosure may comprise one or more than one phosphate ester of formula (I), such as any embodiment described above, and one or more than one phosphate ester not of formula (I). The phosphate ester(s) of formula (I) make up more than 50% by weight based on the total weight of all phosphate esters in the heat transfer fluid, e.g., at least 60%, at least 70%, at least 80%, at least 90%, at least 95% or at least 99% of all phosphate esters in the heat transfer fluid. Therefore, when present, the phosphate ester(s) not of formula (I) make up less than 50% of the total weight of all phosphate esters in the heat transfer fluid, e.g., no more than 40%, no more than 30%, no more than 20%, no more than 10%, or no more than 5% of the total weight of all phosphate esters in the heat transfer fluid. Preferably, phosphate esters not of formula (I) include triphenyl phosphate (TPP) and trialkyl phosphate esters having less than 6 carbon atoms per alkyl group. For example, the heat transfer fluid may comprise one or more than one phosphate ester of formula (I)-such as any embodiment described above (e.g., the embodiments where R in formula (I) is independently chosen from unsubstituted phenyl and C₁₋₁₂ alkyl-substituted phenyl, such as described directly above)-and triphenyl phosphate, wherein the triphenyl phosphate makes up less than 50% of the total weight of all phosphate esters in the heat transfer fluid, e.g., no more than 40%, no more than 30%, no more than 25%, no more than 20%, no more than 10%, or no more than 5% of the total weight of all phosphate esters in the heat transfer fluid. In such embodiments, for example, the triphenyl phosphate may be present from about 0.5, from about 2, from about 5 or from about 10% by weight to about 40, to about 30, or to about 25% by weight, based on the total weight of all phosphate esters in the heat transfer fluid. Often, the amount of triphenyl phosphate ranges from about 0 or from about 2% to about 25%, such as from about 0 or from about 2% to about 10 or to about 5% or from about 5 or from about 10% to about 25 or to about 20%, based on the total weight of all phosphate esters in the heat transfer fluid.

In another example, the heat transfer fluid may comprise one or more than one phosphate ester of formula (I)-such as any embodiment described above, (e.g., embodiments where R in formula (I) is independently chosen from unsubstituted phenyl and C₁₋₁₂ alkyl-substituted phenyl, such as described directly above)-one or more than one trialkyl phosphate ester having less than 6 carbon atoms per alkyl group (e.g., tripropyl phosphate, tributyl phosphate or tripentyl phosphate), and optionally triphenyl phosphate. The triphenyl phosphate and the one or more than one trialkyl phosphate make up less than 50% of the total weight of all phosphate esters in the heat transfer fluid, e.g., no more than 40%, no more than 30%, no more than 25%, no more than 20%, no more than 10%, or no more than 5% of the total weight of all phosphate esters in the heat transfer fluid. In such embodiments, for example, the triphenyl phosphate may be present from about 0.5, from about 2, from about 5 or from about 10% by weight to about 40, to about 30, or to about 25% by weight, based on the total weight of all phosphate esters in the heat transfer fluid. Often, the amount of triphenyl phosphate ranges from about 0 or from about 2% to about 25%, such as from about 0 or from about 2% to about 10 or to about 5% or from about 5 or from about 10% to about 25 or to about 20%, based on the total weight of all phosphate esters in the heat transfer fluid. The one or more than one trialkyl phosphate having less than 6 carbon atoms per alkyl group may be present, for example, from about 5 or from about 10% by weight to about 40, to about 30 or to about 20% by weight, based on the total weight of all phosphate esters in the heat transfer fluid.

The heat transfer fluid of the present disclosure may also include one or more other base oils, such as mineral oils, polyalphaolefins, esters, etc. The other base oil(s) and amounts thereof should be chosen to be consistent with the properties suitable for the circulating immersion cooling fluid as described herein. Typically, the phosphate ester of formula (I) or mixture thereof makes up more than 50% by weight of the heat transfer fluid. For example, in many embodiments, the one or more than one phosphate ester of formula (I) is at least 60%, at least 70%, at least 80%, at least 90%, at least 95%, or at least 99% by weight of the heat transfer fluid.

The heat transfer fluid of the present disclosure may further comprise one or more performance additives. Examples of such additives include, but are not limited to, antioxidants, metal deactivators, flow additives, corrosion inhibitors, foam inhibitors, demulsifiers, pour point depressants, and any combination or mixture thereof. Fully-formulated heat transfer fluids typically contain one or more of these performance additives, and often a package of multiple performance additives. Often, one or more performance additives are present at 0.0001 wt% up to 3 wt%, or 0.05 wt% up to 1.5 wt%, or 0.1 wt% up to 1.0 wt%, based on the weight of the heat transfer fluid.

In some embodiments, the heat transfer fluid consists essentially of one or more than one phosphate ester of formula (I) and optionally one or more performance additives. In some embodiments, the heat transfer fluid consists of one or more than one phosphate ester of formula (I) and optionally one or more performance additives. In further embodiments, the heat transfer fluid consists essentially of one or more than one phosphate ester of formula (I), one or more than one phosphate ester not of formula (I), and optionally one or more performance additives. In further embodiments, the heat transfer fluid consists of one or more than one phosphate ester of formula (I), one or more than one phosphate ester not of formula (I), and optionally one or more performance additives.

The phosphate esters of the present disclosure, including mixtures thereof, are known or can be prepared by known techniques. For example, trialkyl phosphate esters are often prepared by the addition of alkyl alcohol to phosphorous oxychloride or phosphorous pentoxide. Alkylated triphenyl phosphate esters, including mixtures thereof, may be prepared according to a variety of known techniques, such as the addition of alkylated phenol to phosphorous oxychloride. Known processes are described, e.g., in U.S. Patent Nos. 2,008,478, 2,868,827, 3,859,395, 5,206,404 and 6,242,631.

The physical properties of the presently disclosed heat transfer fluid may be adjusted or optimized at least in part based on the extent of alkylation of the phosphate ester or phosphate ester mixtures of formula (I) and/or based on the proportions by weight of the phosphate ester(s) of formula I and the phosphate ester(s) not of formula (I).

Typically, the heat transfer fluid of the present disclosure has a flash point according to ASTM D92 of ≥ 190 °C; a kinematic viscosity measured at 40 °C according to ASTM D445 of less than 50 cSt; a pour point according to ASTM D5950 of ≤ -20 °C; and a DC resistivity measured at 25 °C according to IEC 60247 of > 0.25 GOhm-cm.

Preferably, the flash point of the heat transfer fluid according to ASTM 92 is ≥ 200 °C.

Preferably, the kinematic viscosity of the heat transfer fluid measured at 40 °C according to ASTM D445 is ≤ 40 cSt or ≤ 35 cSt, more preferably ≤ 30 cSt.

Preferably, the pour point of the heat transfer fluid according to ASTM D5950 is ≤ -25 °C, more preferably ≤ -30 °C.

Preferably, the DC resistivity of the heat transfer fluid measured at 25 °C according to IEC 60247 is > 0.5 GOhm-cm, preferably > 1 GOhm-cm or > 5 GOhm-cm.

Also disclosed is a method of cooling electrical componentry comprising at least partially immersing electrical componentry in a heat transfer fluid within a reservoir, and circulating the heat transfer fluid out of the reservoir, through a circulating pipeline of a circulation system, and back into the reservoir, wherein the heat transfer fluid is as described above for the immersion cooling system.

Further non-limiting disclosure is provided in the Examples that follow.

### EXAMPLES

### Procedures

Heat transfer fluids in accordance with the present disclosure, as well as heat transfer fluids of the Comparative Examples, were evaluated to determine their flash point (ASTM D92), kinematic viscosity measured at 40 °C (ASTM D445), pour point (ASTM D5950), and DC resistivity measured at 25 °C (IEC 60247).

### Example 1

Butylated triphenylphosphate (butylated TPP), which is a mixture of triphenyl phosphate (in the range of 2.5 to 25 wt%) and a mixture of mono(butylphenyl) diphenyl phosphate, di(butylphenyl) monophenyl phosphate, and tributylphenyl phosphate (in the range of 75 to 98.5 wt%), available commercially under the name Durad^{®} 220B, was evaluated according to the procedures above.

### Example 2

Tris(2-ethylhexyl) phosphate, available commercially under the name Disflamoll^{®} TOF, was evaluated according to the procedures above.

### Example 3a

A mixture of butylated TPP as in Example 1 and tri-n-butyl phosphate at a 90:10 ratio by weight of butylated TPP to tri-n-butyl phosphate was evaluated according to the procedures above.

### Example 3b

A mixture of butylated TPP as in Example 1 and tri-n-butyl phosphate at a 75:25 ratio by weight of butylated TPP to tri-n-butyl phosphate was evaluated according to the procedures above.

### Comparative Example 1

Trimethyl phosphate was evaluated according to the procedures above.

### Comparative Example 2

Tri-n-propyl phosphate was evaluated according to the procedures above.

### Comparative Example 3

Triisopropyl phosphate was evaluated according to the procedures above.

### Comparative Example 4

Tri-n-butyl phosphate was evaluated according to the procedures above.

### Comparative Example 5a

A mixture of butylated TPP as in Example 1 and tri-n-butyl phosphate at a 50:50 ratio by weight of butylated TPP to tri-n-butyl phosphate was evaluated according to the procedures above.

### Comparative Example 5b

A mixture of butylated TPP as in Example 1 and tri-n-butyl phosphate at a 25:75 ratio by weight of butylated TPP to tri-n-butyl phosphate was evaluated according to the procedures above.

| **Example** | **Viscosity at 40 C (cSt)** | **Pour Point (°C)** | **Flash Point (°C)** | **DC Resistivity at 25°C (GOhm-cm)** |
|---|---|---|---|---|
| **1** | 45 | -24 | 250 | 6.37 |
| (butylated TPP) | | | | |
| **2** | 7.9 | <-75 | 214 | 153 |
| (Tri-2-ethylhexyl phosphate) | | | | |
| **3a** | 26 | -30 | 218 | 2.43 |
| (90:10, butylated TPP: tri-n-butyl phosphate) | | | | |
| **3b** | 15 | -48 | 200 | 1.13 |
| (75:25, butylated TPP: tri-n-butyl phosphate) | | | | |
| **CE 1** | 1.3 | - | 107 | < 0.25 |
| (trimethyl phosphate) | | | | |
| **CE 2** | 3.3 | - | 123 | < 0.25 |
| (tri-n-propyl phosphate) | | | | |
| **CE 3** | 1.7 | - | 102 | < 0.25 |
| (triisopropyl phosphate) | | | | |
| **CE 4** | 2.5 | <-75 | 168 | < 0.25 |
| (tri-n-butyl phosphate) | | | | |
| **CE 5a** | 6.9 | -68 | 176 | 0.29 |
| (50:50, butylated TPP: tri-n-butyl phosphate) | | | | |
| **CE 5b** | 3.9 | -71 | 175 | < 0.25 |
| (25:75, butylated TPP: tri-n-butyl phosphate) | | | | |

As shown in the Table above, each of Examples 1, 2, 3a and 3b had a flash point ≥ 200 °C, a pour point ≤ -20 °C, often ≤ -30 °C, a kinematic viscosity at 40°C of less than 50 cSt, often less than 30 cSt, and a DC resistivity at 25°C of > 1 GOhm-cm. In contrast, Comparative Examples 1-4, 5a and 5b-which are C₁₋₄ alkyl phosphates or contain more than 50% by weight of phosphate esters not of formula (I), based on the total weight of all phosphate esters-each exhibited a lower flash point well below 200 °C and a lower DC resistivity relative to Examples 1, 2, 3a and 3b.

### Example 4

The butylated TPP of Example 1 was evaluated in a thermal propagation nail test to simulate thermal runaway conditions. The test was carried out in accordance with standard GB 38031 - 2020 as per the following: A battery module was packed using 7 round cells adjacent to one another, with one middle cell and 6 cells surrounding the middle cell. The cells were contained within a battery-like housing filled with the sample fluid, so that the cells were fully immersed in the sample fluid. There was no active cooling of the sample fluid. The middle cell was short circuited by a nail being directly inserted into the middle cell resulting in a temperature rise in the nailed cell. The surrounding cells were observed to evaluate whether the nailed cell and its associated temperature rise would trigger thermal runaway of the surrounding cells. With the butylated TPP fluid, no thermal runaway or fire development occurred. All of the surrounding 6 cells stayed intact and remained at full power.

### Example 5

The tris(2-ethylhexyl) phosphate of Example 2 was evaluated in the thermal propagation nail test described in Example 5. With the tris(2-ethylhexyl) phosphate fluid, no thermal runaway or fire development occurred. All of the surrounding 6 cells stayed intact and remained at full power.

## Claims

1. An immersion cooling system comprising
electrical componentry, preferably a battery,
a heat transfer fluid, and
a reservoir, wherein the electrical componentry is at least partially immersed in the heat transfer fluid within the reservoir, and
a circulating system capable of circulating the heat transfer fluid out of the reservoir, through a circulating pipeline of the circulating system, and back into the reservoir,
wherein the heat transfer fluid comprises one or more than one phosphate ester of formula (I) 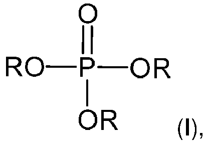
where each R in formula I is independently chosen from C₆₋₁₈ alkyl, preferably C₆₋₁₂ alkyl, or each R is independently chosen from unsubstituted phenyl and C₁₋₁₂ alkyl-substituted phenyl, provided that the R groups are not all unsubstituted phenyl, and the one or more than one phosphate ester of formula (I) constitutes more than 50% by weight based on the total weight of all phosphate esters in the heat transfer fluid.

2. The immersion cooling system of claim 1, wherein the battery is a battery module for an electric vehicle .

3. The immersion cooling system of claim 1 or 2, wherein the circulating system comprises a pump and a heat exchanger and optionally a heat transfer fluid tank.

4. The immersion cooling system of any one of claims 1 to 3, wherein the heat transfer fluid comprises a mixture of compounds of formula (I), preferably at least two from the group chosen from mono(alkylphenyl) diphenyl phosphate, di(alkylphenyl) monophenyl phosphate and tri(alkylphenyl) phosphate.

5. The immersion cooling system of claim 4, wherein the mixture of compounds of formula (I) comprises
(a) from about 35 to about 95 wt% mono(alkylphenyl) diphenyl phosphate,
(b) from about 5 to about 55 wt% di(alkylphenyl) monophenyl phosphate, and
(c) from about 0 to about 20 wt% of tri(alkylphenyl) phosphate,
wherein components (a), (b) and (c) total 100 wt% and all of the weight percentages are based on the total weight of all phosphate esters of formula (I).

6. The immersion cooling system of claim 5, wherein the mixture of compounds of formula (I) comprises
(a) from about 65 to about 95 wt% mono(alkylphenyl) diphenyl phosphate,
(b) from about 5 to about 35 wt% di(alkylphenyl) monophenyl phosphate, and
(c) from about 0 to about 5 wt% tri(alkylphenyl) phosphate,
wherein components (a), (b) and (c) total 100 wt% and all of the weight percentages are based on the total weight of all phosphate esters of formula (I).

7. The immersion cooling system of claim 5, wherein the mixture of compounds of formula (I) comprises
(a) from about 35 to about 65 wt% mono(alkylphenyl) diphenyl phosphate,
(b) from about 25 to about 55 wt% di(alkylphenyl) monophenyl phosphate, and
(c) from about 5 to about 20 wt% tri(alkylphenyl) phosphate,
wherein components (a), (b) and (c) total 100 wt% and all of the weight percentages are based on the total weight of all phosphate esters of formula (I).

8. The immersion cooling system of any one of claims 1 to 7, wherein the heat transfer fluid further comprises one or more than one phosphate ester not of formula (I) chosen from trialkyl phosphates having less than 6 carbon atoms per alkyl group and triphenyl phosphate.

9. The immersion cooling system of claim 8, wherein the heat transfer fluid comprises triphenyl phosphate from about 2 to about 25% by weight, based on the total weight of all phosphate esters in the heat transfer fluid.

10. The immersion cooling system of claim 8 or 9, wherein the heat transfer fluid comprises trialkyl phosphate having less than 6 carbon atoms per alkyl group from about 5 to about 40% by weight, based on the total weight of all phosphate esters in the heat transfer fluid.

11. The immersion cooling system of claim 6, wherein the heat transfer fluid comprises no more than about 10 wt% triphenyl phosphate, such as no more than about 5 wt%, based on the total weight of all phosphate esters in the heat transfer fluid.

12. The immersion cooling system of claim 7, wherein the heat transfer fluid comprises no more than about 25 wt% triphenyl phosphate, such as no more than about 20 wt%, based on the total weight of all phosphate esters in the heat transfer fluid.

13. A method of cooling electrical componentry comprising providing an immersion cooling system according to any one of claims 1-12, and circulating the heat transfer fluid out of the reservoir, through a circulating pipeline of a circulation system, and back into the reservoir.

14. The method of claim 13, wherein the circulating system comprises a pump and a heat exchanger, and the step of circulating the heat transfer fluid comprises pumping the heat transfer fluid out of the reservoir through a circulating pipeline, through the heat exchanger, and back into the reservoir.

15. The method of claim 14, wherein the circulating system further comprises a heat transfer fluid tank, and the heat transfer fluid flowing through the heat exchanger is pumped into the heat transfer fluid tank and from the heat transfer fluid tank back into the reservoir.
